# EUROPÄISCHE PATENTSCHRIFT

(11) **EP 2 448 685 B1**
(45) Veröffentlichungstag und Bekanntmachung des Hinweises auf die Patenterteilung: **28.10.2015**
(21) Anmeldenummer: 10710147.9
(22) Anmeldetag: 25.02.2010
(51) Int. Cl.: B08B 9/02, B08B 9/032, B08B 9/035, B64D 11/02, B64F 1/28, B64F 5/00

(54) **VORRICHTUNG UND VERFAHREN ZUM REINIGEN VON ABWASSERLEITUNGEN VON UNTERDRUCKTOILETTENANLAGEN**
DEVICE AND METHOD FOR CLEANING WASTEWATER LINES OF VACUUM TOILET SYSTEMS
DISPOSITIF ET PROCÉDÉ DE NETTOYAGE DE CONDUITS D'EAUX USÉES D'INSTALLATIONS DE TOILETTES SOUS PRESSION

(30) Priorität: 30.06.2009 AT 10182009
(43) Veröffentlichungstag der Anmeldung: 09.05.2012
(73) Patentinhaber: Banny-Reiter, Ulrike, 1020 Wien (AT); Hartl, Andrea, 2453 Sommerein (AT)
(72) Erfinder: HARTL, Andrea, A-2453 Sommerein (AT)
(74) Vertreter: Patentanwälte Barger, Piso & Partner
(86) Internationale Anmeldenummer: PCT/AT2010/000053
(87) Internationale Veröffentlichungsnummer: WO 2011/000001

(56) Entgegenhaltungen:
- EP-A1- 1 336 436
- DE-A1- 4 022 285
- DE-A1-102007 004 278
- US-A- 5 800 629

## Beschreibung

Die Erfindung betrifft eine Vorrichtung und ein Verfahren zum Reinigen von Abwasserleitungen von Unterdrucktoilettenanlagen, insbesondere in Flugzeugen, Zügen und Bussen entsprechend dem Oberbegriff des Anspruches 1 bzw. dem Oberbegriff des Anspruches 8 und der EP 1 336 436.

In dieser Druckschrift wird eine Vorrichtung beschrieben, bei der die Reinigungsflüssigkeit durch eine Druckpumpe zur Abwasserleitung gefördert wird, diese aber stets unter geringerem als dem Atmosphärendruck stehen soll, was dadurch bewerkstelligt wird, dass die gesamte Vorrichtung samt Tank durch eine Vakuumpumpe unter reduziertem Druck gehalten wird. Die Nachteile sind neben hohem Energieverbrauch und starrem Betrieb (keine Möglichkeit, zwei Tanks zu verwenden) eine deutliche Reduktion des tatsächlich in der Abwasserleitung wirkenden Unterdrucks und eine permanente Förderung von Abluft und Dämpfen des Reinigungsmittels in die Umwelt, neben einer unangenehmen Belastung des Tanks durch den äußeren Überdruck.

Eine andere Vorrichtung bzw. Verfahren sind aus der DE 10 2007 004 278 A1 bekannt. Dabei wird Reinigungsmittel, uU auch ein Molch, durch die Abwasserleitung gepumpt, wobei vor Beginn der Reinigung spezielle Dichtungsoperationen durchgeführt werden, um den Austritt von Reinigungsflüssigkeit und/oder Fäkalien zu verhindern. Dieses Verfahren ist somit aufwändig und hängt sowohl im Hinblick auf das Ergebnis als auch im Hinblick auf die Unversehrtheit der Umgebung von der Zuverlässigkeit des Personals und der Tauglichkeit der Dichtmittel ab, was insbesondere bei Flugzeugen extrem unerwünscht ist.

Derartige Toilettenanlagen, bei denen die Fäkalien und das Spülmittel mittels Unterdruck durch eine Sammelleitung in einen Sammelbehälter transportiert werden, unterliegen einer erhöhten Kalk- und Urinsteinablagerung, was mit zunehmender Gebrauchsdauer zu einer deutlichen Reduzierung des freien Querschnittes der Abwasserleitung und damit zur Herabsetzung der Effizienz der Toilettenanlage führt. Der Unterdruck wird beim Flug in passender Höhe durch Öffnen einer Verbindung zwischen Toilette, Sammelbehälter und Außenluft geschaffen, bei niedrigem Flug bzw. am Boden durch künstlich erzeugten Unterdruck mittels Unterdruckgenerator. Um den sogenannten Luftbedarf gering zu halten, ist zwischen den einzelnen Toiletten und der Sammelleitung jeweils eine gut dichtende Absperrung vorgesehen, die nur beim Betätigen der Spülung geöffnet wird. Die Waschbecken sind nicht an dieses Entsorgungssystem angeschlossen, sondern besitzen einen eigenen Kreislauf.

Es ist, zusätzlich zur oben beschriebenen Methode, bekannt, die Sammelleitung(en) durch die Verwendung von kalklösenden bzw. urinsteinlösenden Chemikalien zu reinigen, doch macht dies den Ausbau der Sammelleitung notwendig. Durch den notwendigen Ausbau und Wiedereinbau kommt es zu beträchtlichen Standzeiten des Flugzeugs.

Eine Besonderheit dieser Anlagen ist es, dass nicht nur die verschiedenen Toiletten über eine Sammelleitung mit dem Behälter verbunden sind, sondern dass es darüber hinaus im Bereich der Toilette, die, in Spülrichtung gesehen, am weitesten stromaufwärts liegt, meist eine eigene Zugangsmöglichkeit zur eigentlichen Abwasserleitung gibt. Dieser Zugang wird auch verwendet, um mit Hochdruckwasserstrahldüsen, die an flexiblen Druckschläuchen sitzen und von dort in das System eingeführt werden können, eine Reinigung vorzunehmen, die die zuvor genannten Reinigungsmöglichkeiten unterstützt oder auch ersetzt. Es hat allerdings die Verwendung von Hochdruckwasserstrahlsystemen den Nachteil, dass eine Überprüfung der Wirksamkeit kaum möglich ist und dass die Gefahr der Beschädigung von Dichtungen un damit auch die Gefahr des Austritts von Reinigungsflüssigkeit, groß ist. Beim Fehlen eines eigenen Zugangs kann die genannte Toilette abmontiert werden, wodurch man einen passenden Zugang bei relativ geringem Aufwand erhält.

Im Vergleich zu diesen aufwändigen und doch unzuverlässigen Reinigungsverfahren ist es Aufgabe der Erfindung, eine Vorrichtung bzw. ein Verfahren zur Verfügung zu stellen, die bzw. das diese Nachteile nicht aufweist, und ohne Ausbau von Leitungen mit geringem Aufwand an Personalstunden und kurzer Standzeit des Flugzeugs, Zuges oder Busses eine zuverlässige Reinigung ohne Gefahr des Flutens der Umgebung ermöglicht.

Erfindungsgemäß ist dazu eine Vorrichtung gemäß dem kennzeichnenden Teil des Anspruches 1 bzw. ein Verfahren gemäß dem kennzeichnenden Teil des Anspruches 6 vorgesehen.

Es handelt sich bei der erfindungsgemäßen Vorrichtung um eine mobile, externe Vorrichtung mit zumindest einem Tank und einer eigenen Umlaufpumpe. Die Umlaufpumpe wird nach dem Saugprinzip eingesetzt, sodass die zu reinigende Abwasserleitung keinem Überdruck ausgesetzt wird, und es daher zu keinem Austritt von Reinigungsmittel oder Verunreinigungen kommt. In einer bevorzugten Variante wird mittels einer Hilfspumpe die hydrostatische Druckdifferenz zwischen der Vorrichtung und der Anschlussstelle an die zu reinigende Abwasserleitung überwunden. Das ist insbesondere bei Großraumflugzeugen, bei denen diese Höhendifferenz 10 Meter und mehr betragen kann, notwendig, da mittels Saugens allein nur Höhendifferenzen von bis zu 7 Meter (schon mit Schwierigkeiten verbunden) überwunden werden können.

Die Hilfspumpe wird mittels eines Druckmessgerätes oder einer für jedes Flugzeug festgelegten Datensatzes so betrieben, dass der Druck im Inneren der Leitung an der Anschlussstelle etwas geringer ist als der Luftdruck, wodurch jedwedes Austreten von Medium vermieden wird. Die Druckdifferenz wird in Abhängigkeit von der gewünschten Sicherheit (Messfehler, Schwankungen der Pumpenleistung, periodische Druckschwankungen im Medium, etc.) festgelegt und ist für den Fachmann in Kenntnis der Erfindung leicht zu bestimmen.

Das Verfahren wird so durchgeführt, dass die Abwasserleitung am flugzeugfesten Sammeltank, der ja im Normalbetrieb am Weitesten stromabwärts liegt, aber nicht durch ihn hindurch, mittels eines Zufuhrschlauches mit dem mobilen Tank verbunden wird und an der eingangs genannten, im normalen Betrieb am Weitesten stromaufwärts gelegenen Toilette, die Saugseite der externen Pumpe mittels eines Saugschlauches mit der Sammelleitung verbunden wird und dass weiters, entweder temporär oder permanent, die Druckseite der Pumpe bzw. der Hilfspumpe mit der Einlassseite des externen Tanks verbunden ist (die Anschlüsse können auch umgekehrt gewählt werden, es ergibt sich "Gleichstrom" oder "Gegenstrom" in Relation zum Fluss der Fäkalien während des normalen Betriebes). Der Anschluss an die "endständige" Toilette erfolgt entweder über den oben erwähnten Zugang oder durch Abmontieren der Toilette und offen Halten des Verschlusses.

In der Folge wird durch Betätigung der Pumpe(n) Reinigungsmittel vom externen Tank durch den Zufuhrschlauch, sodann die gesamte Abwasserleitung und den Saugschlauch zur Saugseite der Pumpe, von dort über den Druckschlauch der Pumpe in den externen Tank geleitet, und führt so zum Lösen bzw. Ablösen der Verunreinigungen in der Abwasserleitung. Bei Bedarf, beispielsweise abhängig vom Grad der Verschmutzung, können dem Reinigungsmittel auch mechanische Hilfsmittel wie Kunststoffgranulat aus Polycarbonat oder Nussschalen oder ähnliches beigemengt werden

Es können verschiedentlich Ausgestaltungen vorgesehen sein, so ist es möglich, den externen Tank durch Zwischenwände, die als Filter wirken, so zu unterteilen, dass die abgelösten Verunreinigungen im Tank verbleiben und nicht erneut durch die Abwasserleitung gesaugt werden, so ist es möglich das Reinigungsmittel nach Bedarf mittels eingebauter Heizung zu temperieren, um die Reinigungswirkung zu erhöhen, es können Schaugläser vorgesehen sein, um den Reinheitszustand der durch die Abwasserleitung gesaugten Spülflüssigkeit optisch überprüfen zu können, es können Durchflussmessgeräte und/oder Druckmessgeräte und optische Sonden vorgesehen sein, um die Änderungen im lichten Querschnitt verfolgen zu können, all diese Messgeräte können passend mit einer Datenverarbeitungsanlage verbunden sein, die einerseits die Messwerte speichert, andererseits die Reinigungsschritte aufgrund der Messergebnisse steuert. Es können mehrere externe Tanks vorgesehen sein u.dgl. mehr. Auf die trivialen, stets vorhandenen Armaturen wie: Ablassventil, Füllstandsüberwacher, Füllstutzen, etc. wird weil sie auf dem Gebiete der Tanks und der Hydraulik notorisch sind, nicht weiter eingegangen.

Der Tank, bzw. das System, kann auch zusätzlich mit Vakuum mittels einer auf dem Gerät montieren Vakuumpumpe oder eines Vakuumgenerators beaufschlagt werden. Auch kann, wie bereits erwähnt, eine zusätzliche Pumpe, bypass- oder drehzahlgesteuert, zur Überwindung von großen Höhen oder zur effizienten Nachförderung des Reinigungsmittels nach Bedarf vorgesehen werden.

Weiters können der mobile Tank und die Pumpeneinheit gemeinsam auf einem Fahrzeug oder Anhänger montiert sein, es kann auch ein weiterer Tank vorgesehen sein, der beispielsweise reines Wasser enthält und am Ende der Reinigung dazu verwendet wird, das restliche Spülmittel auszuspülen um jedwede weitere, unter Umständen unerwünschte Korrosion oder Geruchsbelästigung zu vermeiden.

Selbstverständlich weist die erfindungsgemäße Vorrichtung, wenn es um die Wartung von Flugzeugtoiletten geht, sämtliche spezifischen Merkmale, wie sie bei der Wartung von Flugzeugen notwendig sind, auf, dazu gehören galvanische Verbindungen zur Vermeidung jedweder elektrischen Potentialdifferenz, es können auch Feuchtigkeitswächter im Bereich der temporären Anschlussstellen ausgelegt werden, um Undichtigkeiten schon erkennen zu können, bevor eventuell austretende Reinigungsflüssigkeit in schädlichen Mengen austritt, und dergleichen mehr.

Wenn es sich um die Reinigung von Zug- oder Bustoiletten handelt, kann auf viele dieser sicherheitstechnisch bedingten Maßnahmen verzichtet werden, unter Umständen ist auch nur eine eingeschränkte oder keine Mobilität erforderlich, der Fachmann auf diesem Gebiete kann in Kenntnis der Erfindung leicht feststellen, welche dieser oder anderer Maßnahmen er zur Durchführung des erfindungsgemäßen Verfahrens benötigt.

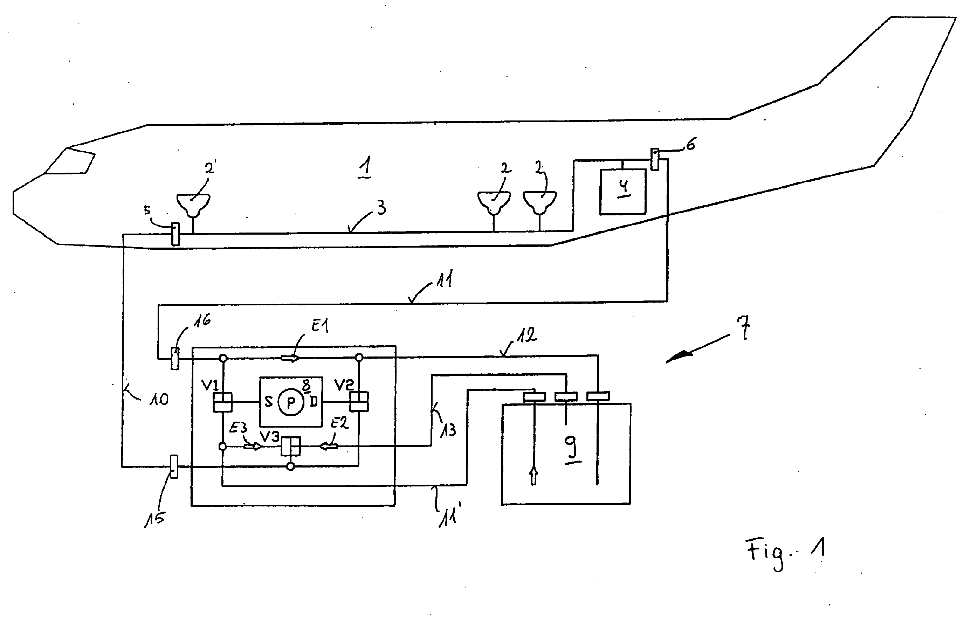

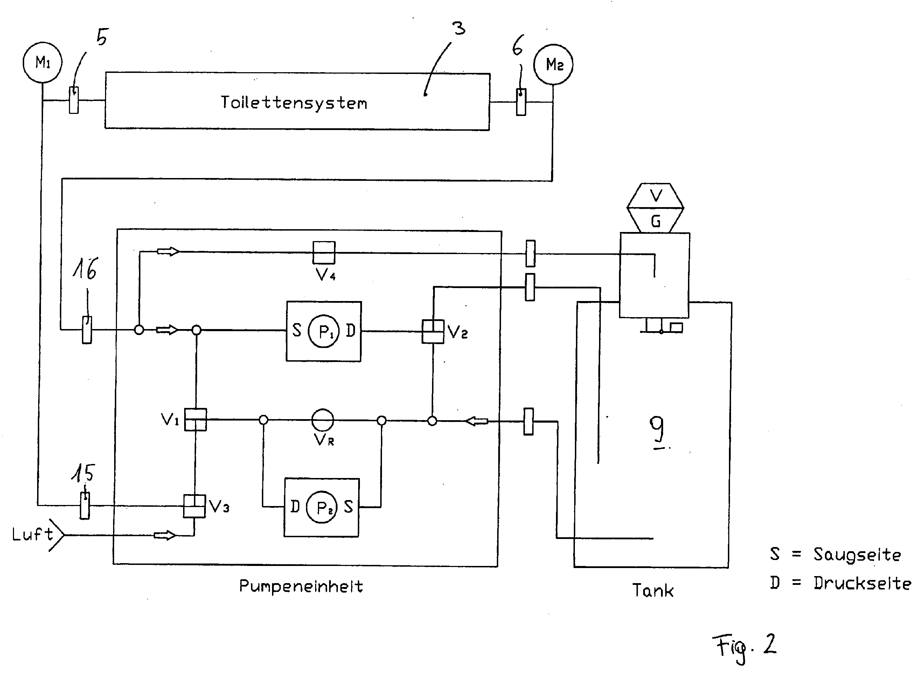

Die Erfindung wird im Folgenden anhand der Zeichnungen näher erläutert. Dabei zeigt die Fig. 1, rein schematisch, die Situation während des Betriebes anhand der Reinigung der Abwasserleitung eines Flugzeuges und die Fig. 2 eine Variante.

Die Fig. 1 zeigt ein allgemein mit 1 bezeichnetes Flugzeug, in dem mehrere Toiletten 2, 2' in eine gemeinsamen Abwasserleitung 3 münden. Diese Abwasserleitung 3 führt zu einer Sauganlage mit flugzeugfestem Sammeltank 4. Wie aus der Figur ersichtlich ist, ist die Toilette 2' im Normalbetrieb die am weitesten stromaufwärts liegende Toilette, die Abwasserleitung 3 weist in ihrem Bereich einen verschließbaren Toilettenanschluss 5 auf. Ebenso weist die Unterdruckvorrichtung mit Tank 4 im Bereich der Einmündung der Abwasserleitung 3 einen Tankanschluss 6 auf.

Die erfindungsgemäße, externe Reinigungsvorrichtung wird in ihrer Gesamtheit mit 7 bezeichnet und besteht im Wesentlichen aus einer Pumpe 8, im allgemeinen eine Saugpumpe, und aus einem externen Tank 9. Zur Verbindung mit der zu reinigenden Anlage weist die Reinigungsvorrichtung 7 einen Versorgungsanschluss 15 zur Verbindung mittels einer Versorgungsleitung 10 mit dem Toilettenanschluss 5 und einen Sauganschluss 16 zur Verbindung mittels einer Saugleitung 11 mit dem Tankanschluss 6 auf Die Reinigung erfolgt somit im dargestellten Ausführungsbeispiel im Gleichstrom zum Normalbetrieb.

Zwischen dem Pumpenteil der Reinigungsvorrichtung 7 und dem Tankteil bestehen zumindest drei hydraulische Verbindungen: eine Entnahmeleitung 11', eine Rückführleitung 12 und eine Lüftungsleitung 13, deren Bedeutung weiter unten erläutert wird. Im dargestellten Ausführungsbeispiel weist die mobile Einheit 7 neben den bereits besprochenen Bauteilen und Elementen noch folgende Besonderheiten auf: Ein erstes, saugseitig der Pumpe gelegenes 3/2 Wege-Ventil V1, dessen beiden anderen Anschlüsse die Entnahmeleitung 11' und die Verbindung zum Sauganschluss 16 sind; ein zweites, druckseitig der Pumpe gelegenes 3/2 Wege-Ventil V2, dessen beiden anderen Anschlüsse die Rückführleitung 12 und die Verbindung zum Versorgungsanschluss 15 sind; und schließlich ein drittes 3/2 Wege-Ventil V3, das wahlweise die Lüftungsleitung 13, die Entnahmeleitung 11' und die Leitung zwischen dem Ventil V2 und dem Sauganschluss miteinander verbindet.

Das erste 3/2 Wege-Ventil V1 verbindet entweder die Saugleitung 11 mit der Saugseite S der Pumpe (dargestellte Stellung) 8 oder es verbindet die Entnahmeleitung 11' des externen Tankes 9 mit der Pumpe. Das zweite 3/2 Wege-Ventil V2 verbindet entweder die Druckseite D der Pumpe mit der Rückführleitung 12 (dargestellte Stellung) oder es verbindet die Druckseite D der Pumpe mit der Zufuhrleitung 10; das dritte 3/2 Wege-Ventil V3 schließlich verbindet entweder die Lüftungsleitung 13 mit der Versorgungsleitung 10 (dargestellte Stellung), oder die Entnahmeleitung 11' vom externen Tank 9 mit der Versorgungsleitung 10. Weiters sind drei automatische Einwegventile (Rückschlagventile) vorgesehen, die in Richtung der Pfeile durchgängig sind: Ein erstes Rückschlagventil E1 zwischen dem Sauganschluss 16 und der Rückführleitung 12, durchgängig in der genannten Richtung; ein zweites Rückschlagventil E2 in der Lüftungsleitung 13, durchgängig zum V3 und ein drittes Rückschlagventil E3 in der Verbindung zwischen Entnahmeleitung 11' und V3, durchgängig Richtung V3.

In der dargestellten Stellung der Ventile wird beim Betrieb der Pumpe 8 Flüssigkeit aus der Abwasserleitung 3 über den Tankanschluss 6 und die Saugleitung 11, das Ventil V1, die Pumpe, das Ventil V2 und die Rückführleitung 12 in den Tank 9 befördert; gleichzeitig wird aus dem Tank 9 über die Lüftungsleitung 13, das Ventil V3, den Versorgungsanschluss 15 und die Versorgungsleitung 10 und den Toilettenanschluss 5 die Abwasserleitung 3 gelüftet, d.h. geleert, es ist somit die Endphase der Reinigung dargestellt. Der Beginn ist folgender:
Zum Durchführen der Reinigung der Abwasserleitung 3 eines Flugzeuges 1 wird zuerst der externe Tank 9 mit Reinigungsmittel gefüllt, sodann wird der Kreislauf Pumpe - Tank gefüllt und entlüftet, sodann wird das Gesamtsystem gefüllt und entlüftet. Dazu wird das erste Ventil V1 in die Füllstellung gebracht, dh es verbindet die Entnahmeleitung 11' mit der Saugseite S der Pumpe 8; das zweite Ventil V2 in die Zirkulierstellung gebracht, sodass es die Druckseite D der Pumpe mit der Versorgungsleitung 10 verbindet, und das dritte Ventil V3, dessen Stellung nicht kritisch ist, wird in die Füll- und Zirkulierstellung gebracht, sodann wird die Pumpe eingeschaltet und kontrolliert, dass die Reinigungsflüssigkeit blasenfrei zirkuliert. Sie gelangt über die Versorgungsleitung 10 in die Abwasserleitung 3, drängt die Luft aus dieser Leitung über die Saugleitung 11 und das erste Rückschlagventil E1 zur Rückführleitung 12 und schließlich in den Tank 9.

Nach erfolgtem Entlüften kann auf Reinigen umgestellt werden. Die Stellung der Ventile V1 und V2 ist wie in der Figur dargestellt, V3 aber verbindet die Entnahmeleitung 11' mit der Versorgungsleitung 10; damit saugt die Pumpe 8 die Reinigungsflüssigkeit vom Tank 9 durch das gesamte System und drückt sie schließlich wieder in den Tank 9 zurück. Da das Entlüften mit geringer Pumpenleistung erfolgen kann, es muss nur der hydrostatische Druck an der höchsten Stelle des Leitungskreises erreicht werden, kommt es nicht zum Aufbau eines merklichen oder gar schädlichen Überdrucks in der Abwasserleitung 3. Während des Reinigens erfolgt der Betrieb wie oben erwähnt, im Saugmodus, ist somit wirksam und ungefährlich. Beim Auftreten von Undichtheiten, beispielsweise von Toilettenanschlüssen, sind die auftretenden Luftblasen im zurücklaufenden Medium ein sicheres Indiz dafür, ohne dass es bei der Betriebsweise gemäß dem Stand der Technik zum Feuchtigkeitsaustritt im Flugzeug käme.

Wenn, beispielsweise durch Widerstandsmessungen des hydraulischen Widerstands zwischen den Anschlussstellen 5 und 6 oder durch Einsichtnahme in den externen Tank 9 oder durch Schaugläser festgestellt ist, dass die Reinigung abgeschlossen ist, ist das System zu entleeren, wie es weiter oben an Hand der ersten Erläuterung der Fig. 1 beschrieben worden ist.

Je nach Anforderung können die bisher genannten Schritte mit einer anderen Reinigungsflüssigkeit, mit klarem Wasser, entweder aus einer Leitung oder aus einem eigenen Frischwassertank zum Spülen des Systems, wiederholt werden. Ob das anfallende, zurückfließende Medium dann in den externen Tank 9 oder einen anderen Tank oder das Kanalsystem gelangt, hängt von den jeweiligen Anforderungen und Vorschriften ab.

Wie leicht ersichtlich ist, kann natürlich die Verbindung der Anschlüsse 5 und 6 vertauscht werden, dann erfolgt die Durchströmung der Abwasserleitung 3 mit dem Reinigungsmittel vom Tankanschluss 6 her gegen die Strömungsrichtung der Fäkalien zur vordersten Toilette 2' und zum Toilettenanschluss 5.

Die Fig. 2 zeigt eine Variante mit einem Vakuumgenerator VG und mit der oben erwähnten Hilfspumpe P2, die es ermöglicht, das Unterdruckverfahren auch bei großen Höhendifferenzen anzuwenden, da damit sichergestellt ist, dass an der Stelle der Einleitung der Reinigungsflüssigkeit, bei M1, ein Druck knapp (0,05 bis 0,25 bar) unter dem Umgebungsdruck herrscht. Dies stellt sicher, dass im Toilettensystem, somit im Flugzeug oder Fahrzeug, auch bei Undichtigkeiten kein Fluid austritt, sondern Umgebungsluft angesaugt wird, was zwar unter Umständen lästig ist, aber keinerlei Beeinträchtigung des Flugzeuges darstellt.

Der Aufbau und der Betrieb der Vorrichtung wird im Folgenden, soweit es im Hinblick auf die Erörterungen der Fig. 1 noch notwendig ist, erläutert.

Die Pumpeneinheit weist drei 3 Dreiwegventile V1, V2, V3, ein regelbares Bypassventil VR, vier Rückschlagventile, durch Pfeile angedeutet, ein Abschaltventil V4 für einen Vakuumgenerator VG und zwei Pumpen P1, P2 auf. Die Pumpen P1, P2 sind Umwälzpumpen, sollen säurefest sein und auch in der Lage sein, abrasive Materialien wie Polycarbonatgranulate, Nussgranulate und dergleichen zu fördern.

Je ein Unterdruckmanometer M1 und M2 befindet sich am Systemeingang M1 und am Systemausgang M2, sodass jederzeit der Unterdruck bzw. der Druckabfall in der Abwasserleitung 3 gemessen werden kann. Dieser kann vom Bediener überwacht werden oder über eine Datenleitung mit einer elektronischen Steuerung verbunden sein, die die Pumpe P2 bzw. das Bypassventil VR entsprechend ansteuert.

Der Bypass VR dient zur Druckregulierung, d.h. zum zumindest teilweisen Abbauen des Druckes auf der Druckseite der Pumpe P2, sodass weder am Systemeingang bei M1 noch im Toilettensystem selbst Überdruck gegenüber dem Umgebungsdruck entstehen oder anliegen kann.

Bei Inbetriebnahme der Vorrichtung nach dem Anschluss an das zu reinigende Toilettensystem wird die Pumpeneinheit entlüftet, indem Spülmittel mittels der Pumpe P2 aus dem Tank 9 angesaugt und über das Entlüftungsventil V1 (anders als dargestellt geschaltet), die Pumpe P1 und das Tankisolierventil V2 in den Tank zurückgefördert wird.

Zum anschließenden Entlüften des ganzen Systems wird das Ventil V1 auf Durchfluss in das Toilettensystem, wie dargestellt, umgeschaltet. Der Vakuumgenerator VG (bzw. die Vakuumpumpe) wird über ein Vakuumgeneratorventil V4 zugeschaltet und saugt Luft aus der Abwasserleitung 3 und unterstützt so das Ansaugen von Spülmittel in das Toilettensystem hinein.

Sobald Spülmittel am zu diesem Zweck bevorzugt transparent ausgebildeten Eingang zum Vakuumgenerator VG sichtbar wird, oder das Ende des Entlüftens auf andere Weise festgestellt wird, wird die Pumpe P1 zugeschaltet und der Vakuumgenerator VG durch Schließen des Vakuumgeneratorventils V4 weggeschaltet und deaktiviert. Die Pumpe P1 übernimmt die Saugleistung und der Reinigungsvorgang läuft selbsterhaltend und unterdruckgesteuert:
Spülmittel gelangt vom Tank 9 über die - je nach den Druckverhältnissen bei M1 ein- bzw. ausgeschaltete - Pumpe P2 und den (noch) geöffnetem Bypass VR und das Ventil V3 zum Eingang bei M1 in und dann durch das zu reinigende Toilettensystem und die Pumpe P1 saugt und fördert das Spülmittel von dort zum Ausgang bei M2 und über das Ventil V2 zurück in den Tank.

Spätestens bei diesem Betriebszustand wird die Pumpe P2 bei geöffnetem Bypass VR zugeschaltet. Durch langsames Schließen des Bypass VR wird der Ausgangsdruck beim Ventil V1 erhöht, bis am Systemeingang, gemessen vom Manometer M1, geringer Unterdruck, wie oben angegeben, eingestellt ist. Dies dient zur Entlastung der Pumpe P1, und verhindert Kavitation im System. Bei geringen Höhenunterschieden zwischen M1 und V1 kann darauf verzichtet werden.

Die Pumpe P2 saugt Spülmittel aus dem Tank 9 und fördert dieses unterstützend unter einem Druck, der über dem Umgebungsdruck liegt, bis zum Manometer M1 kurz vor dem Systemeingang, wobei der Druck so bemessen ist, dass bereits am Systemeingang zuverlässig Unterdruck herrscht. Der eigentliche Reinigungsvorgang erfolgt durch unterdruckgesteuertes Durchsaugen von Spülmittel, eventuelle Verluste durch Ausgasen (chemische Reaktion) werden durch konstante Spülmittelförderung von Pumpe P2 ausgeglichen. Die Regelung des Drucks kann durch Ändern der Stellung des Bypassventils VR entweder händisch oder durch eine elektronische Steuerung in Abhängigkeit vom Messergebnis des Manometers M1 erfolgen.

Besonders wichtig ist die Pumpe P2 zur Überwindung von großen Förderhöhen wie z.B. bei den Toilettensystemen von Großraumflugzeugen wie etwa des Airbus A380, der Boeing 747, usw., weiters, um genügend Spülmitteldurchfluss zu gewährleisten und schließlich auch, Kavitation durch Pumpe P1 zu vermeiden.

Durch Umschalten von V2 kann der Tank 9 von der Einheit getrennt und z.B. geleert oder gereinigt werden, ohne dass der Reinigungsvorgang unterbrochen werden muss. Das Reinigungsmittel fließt in diesem Fall vom Ventil V2 zur Saugseite der Pumpe P2 bzw. den Bypass, je nach Betriebszustand, weiter über die Ventile V1 und V3, das Toilettensystem wieder zur Saugseite der Pumpe P1. Der Tank 9 kann somit während des Betriebs geleert, gereinigt oder ausgetauscht werden.

Beim Beenden des Reinigungsvorganges wird durch Umschalten des Ventils V3 und Abschalten der Pumpe P2 Umgebungsluft zum Toilettensystem gesaugt, wodurch das Spülmittel aus dem System gesaugt wird, ohne dass welches nachfließt. Wenn der von der Pumpe P1 geschaffene Unterdruck nicht mehr ausreicht, kann der Vakuumgenerator VG zugeschaltet werden, das System wird entleert, mittels der Manometer M1, M2 kann eine Dichtheitsprüfung erfolgen.

Das Spülen nach erfolgter Reinigung geschieht in derselben Art und Weise, jedoch wird anstatt Spülmittel reines Wasser verwendet. Ob zwischen Reinigung und Spülung gelüftet wird oder nicht, ist eine Frage des Betriebes, beides wird durch die Erfindung unterstützt und ermöglicht.

Die Erfindung ist nicht auf die dargestellten Ausführungsbeispiele beschränkt, sondern kann verschiedentlich abgewandelt und an die zu reinigenden Systeme angepasst werden. Bei der Reinigung von Bustoiletten stets an der gleichen Stelle einer Garage ist das Vorsehen eines fest montierten externen Tanks 9, unter Umständen mit mehreren Anschlüssen, vorteilhaft; die Unterteilung des Tanks 9 um den Einlass zur Entnahmeleitung 11' herum mit einer Art Filterplatte zum Abtrennen gröberer Verunreinigungen ist möglich, auch die Teilung in einen Vorratstank und einen Sammeltank kann Sinn machen. Dass zum Spülen ein eigener Spülwassertank vorgesehen sein kann, wurde bereits erwähnt.

Wenn, wie zumeist in Bussen, nur eine Toilette, die dann natürlich die endständige Toilette 2' ist, vorhanden ist, reduziert sich die Länge der Abwasserleitung 3 naturgemäß, in vielen Fällen ist aber auch dann das erfindungsgemäße Verfahren vorteilhaft durchführbar. Die Variante der Fig. 2 ist in solchen Fällen zumeist überdimensioniert.

Die Pumpe 8 und die gegebenenfalls vorhandene Elektronik und Steuerung der gegebenenfalls elektromagnetisch angesteuerten Ventile kann über eine eigene Stromversorgung, die dann bevorzugt auch in der mobilen Einheit integriert ist, angetrieben werden, es kann bei umgerüsteten Fahrzeugen ein passender Anschluss oder Generator am Motor vorgesehen sein. Selbstverständlich ist eine externe Versorgung in vielen Fällen möglich und dann vorzusehen.

## Patentansprüche

1. Vorrichtung zum Reinigen einer Abwasserleitung (3) einer Unterdrucktoilettenanlage, insbesondere in einem Flugzeug (1), Zug oder Bus, mit zumindest einer Toilette (2, 2'), einem Sammeltank (4) und der die beiden verbindenden Abwasserleitung (3), sowie einem zumindest temporären Toilettenanschluss (5) im Bereich des einen Endes und einem zumindest temporären Tankanschluss (6) im Bereich des anderen Endes der Abwasserleitung (3) die eine eigene, bevorzugt mobile Reinigungsvorrichtung (7) mit zumindest einem Tank (9) und zumindest einer Pumpe (8) ist, die über einen Versorgungsanschluss (16) zur Abgabe von Reinigungsmittel an einen der Anschlüsse (5, 6) der Abwasserleitung (3) und über einen Sauganschluss (15) zum Absaugen von Medium über den anderen der Anschlüsse (5, 6) der Abwasserleitung (3) verfügt, wobei sie über eine weitere Pumpe (P2) verfügt, die das Reinigungsmittel vom Tank (9) zum Versorgungsanschluss (16) drückt, und wobei der Förderdruck der weiteren Pumpe (P2) regelbar ist, **dadurch gekennzeichnet, dass** die Pumpe (8) zwischen dem Sauganschluss (15) und dem Tank (9) angeordnet ist.

2. Reinigungsvorrichtung nach Anspruch 1, **dadurch gekennzeichnet, dass** der Förderdruck der weiteren Pumpe (P2) über einen Bypass mit Bypassventil (VR) regelbar ist.

3. Reinigungsvorrichtung nach einem der Ansprüche 1 oder 2, **dadurch gekennzeichnet, dass** sie über einen Vakuumgenerator (VG) verfügt, der parallel zur ersten Pumpe (P1) zwischen dem Sauganschluss und dem Tank (9) angeordnet ist und in dessen Leitung ein Vakuumgeneratorventil (V4) vorgesehen ist.

4. Reinigungsvorrichtung nach einem der voranstehenden Ansprüche, **dadurch gekennzeichnet, dass** sie über ein internes Leitungs- und Ventilsystem verfügt, das es wahlweise ermöglicht, die Saugseite (S) der Pumpe (8) mit dem Sauganschluss (15) zu verbinden und den Versorgungsanschluss (16) mit einer Entnahmeleitung (11') des Tanks (9).

5. Reinigungsvorrichtung nach einem der voranstehenden Ansprüche, **dadurch gekennzeichnet, dass** sie über ein internes Leitungs- und Ventilsystem verfügt, das es wahlweise ermöglicht, die Druckseite (D) der Pumpe (8) mit dem Sauganschluss (15) zu verbinden und den Versorgungsanschluss (16) mit einer Rückführleitung (12) des Tanks (9).

6. Reinigungsvorrichtung nach einem der voranstehenden Ansprüche, **dadurch gekennzeichnet, dass** im Tank (9) um die Öffnung der Entnahmeleitung (11') ein Filterkorb vorgesehen ist.

7. Reinigungsvorrichtung nach einem der voranstehenden Ansprüche, **dadurch gekennzeichnet, dass** sie fahrbar, bevorzugt als Anhänger oder auf einem Kraftfahrzeug, ausgebildet ist.

8. Verfahren zum Reinigen einer Abwasserleitung (3) einer Unterdrucktoilettenanlage, insbesondere in einem Flugzeug (1), Zug oder Bus, mit zumindest einer Toilette (2, 2'), einem Sammeltank (4) und der die beiden verbindenden Abwasserleitung (3), sowie einem zumindest temporären Toilettenanschluss (5) im Bereich des einen Endes und einem zumindest temporären Tankanschluss (6) im Bereich des anderen Endes der Abwasserleitung (3), wobei eine eigene, bevorzugt mobile Reinigungsvorrichtung (7) mit zumindest einem Tank (9) und einer eigenen Pumpe (8), über einen Versorgungsanschluss (16) Reinigungsmittel mit einem Druck unter dem Umgebungsdruck an einen der Anschlüsse (5, 6) der Abwasserleitung (3) abgibt und über einen Sauganschluss (15) in der Abwasserleitung (3) befindliches Medium über den anderen der Anschlüsse (5, 6) absaugt, **dadurch gekennzeichnet, dass** die Pumpe (8) in der Leitung zwischen dem Sauganschluss (15) und dem Tank (9) vorgesehen ist, dass eine weitere Pumpe (P2) das Reinigungsmittel vom Tank (9) zum Versorgungsanschluss fördert, und dass der Förderdruck der weiteren Pumpe (P2) in Abhängigkeit vom Messergebnis eines Manometers (M1) geregelt wird.

9. Reinigungsverfahren nach Anspruch 8, **dadurch gekennzeichnet, dass** zum Entlüften des Abwassersystems die Pumpe (8) Reinigungsmittel über den Versorgungsanschluss (16) an einen der Anschlüsse (5, 6) der Abwasserleitung (3) drückt und der andere der Anschlüsse (5, 6) mit dem Tank (9) verbunden ist.

## Claims

1. Device for the cleaning of a sewage pipe (3) of a vacuum toilet facility, in particular in an aeroplane (1), train or bus, having at least one toilet (2, 2'), one collection tank (4) and the sewage pipe (3) connecting the two, as well as an at least temporary toilet connection (5) in the region of one end and an at least temporary tank connection (6) in the region of the other end of the sewage pipe (3) which is a separate, preferably mobile cleaning device (7) having at least one tank (9) and at least one pump (8), which has a supply connection (16) for the release of cleaning agents to one of the connections (5, 6) of the sewage pipe (3) and has a suction connection (15) for the extraction of medium via the other of the connections (5, 6) of the sewage pipe (3), wherein it has an additional pump (P2) which pushes the cleaning agent from the tank (9) to the supply connection (16), and wherein the feed pressure of the additional pump (P2) can be adjusted, **characterised in that** the pump (8) is arranged between the suction connection (15) and the tank (9).

2. Cleaning device according to claim 1, **characterised in that** the feed pressure of the additional pump (P2) can be adjusted via a bypass having a bypass valve (VR).

3. Cleaning device according to one of claims 1 or 2, **characterised in that** it has a vacuum generator (VG) which is arranged parallel to the first pump (P1) between the suction connection and the tank (9) and a vacuum generator valve (V4) is provided in the pipe of said vacuum generator (VG).

4. Cleaning device according to one of the preceding claims, **characterised in that** it has an internal pipe and valve system which makes it optionally possible to connect the suction side (S) of the pump (8) to the suction connection (15) and the supply connection (16) to an extraction pipe (11') of the tank (9).

5. Cleaning device according to one of the preceding claims, **characterised in that** it has an internal pipe and valve system which makes it optionally possible to connect the pressure side (D) of the pump (8) to the suction connection (15) and the supply connection (16) to a recirculation pipe (12) of the tank (9).

6. Cleaning device according to one of the preceding claims, **characterised in that** a filter basket is provided in the tank (9) around the opening of the extraction pipe (11').

7. Cleaning device according to one of the preceding claims, **characterised in that** it is formed to be mobile, preferably as a trailer or on a motor vehicle.

8. Method for the cleaning of a sewage pipe (3) of a vacuum toilet facility, in particular in an aeroplane (1), train or bus, having at least one toilet (2, 2'), one collection tank (4) and the sewage pipe (3) connecting the two, as well as an at least temporary toilet connection (5) in the region of one end and an at least temporary tank connection (6) in the region of the other end of the sewage pipe (3), wherein a separate, preferably mobile cleaning device (7) having at least one tank (9) and a separate pump (8) releases cleaning agents with a pressure which is lower than the surrounding pressure to one of the connections (5, 6) of the sewage pipe (3) via a supply connection (16) and extracts the medium located in the sewage pipe (3) via a suction connection (15) via the other of the connections (5, 6), **characterised in that** the pump (8) is provided in the pipe between the suction connection (15) and the tank (9), an additional pump (P2) feeds the cleaning agent from the tank (9) to the supply connection, and the feed pressure of the additional pump (P2) is adjusted depending on the measurement result of a pressure gauge (M1).

9. Cleaning method according to claim 8, **characterised in that**, for the ventilation of the sewage system, the pump (8) pushes cleaning agents via the supply connection (16) to one of the connections (5, 6) of the sewage pipe (3) and the other of the connections (5, 6) is connected to the tank (9).

## Revendications

1. Dispositif permettant de nettoyer une conduite d'eaux usées (3) d'une installation de toilettes sous pression, en particulier dans un avion (1), un train ou un autocar, comportant au moins une toilette (2, 2'), une cuve collectrice (4) et la conduite d'eaux usées (3) reliant ces deux éléments, ainsi qu'un branchement de toilettes (5) au moins temporaire dans la zone de l'une des extrémités et un branchement de cuve (6) au moins temporaire dans la zone de l'autre extrémité de la conduite d'eaux usées (3), ledit dispositif étant le propre dispositif de nettoyage (7) de préférence mobile, comportant au moins un réservoir (9) et au moins une pompe (8), qui dispose d'un branchement d'alimentation (16) pour fournir un produit de nettoyage à l'un des branchements (5, 6) de la conduite d'eaux usées (3) et d'un branchement d'aspiration (15) pour aspirer un fluide par l'intermédiaire de l'autre des branchements (5, 6) de la conduite d'eaux usées (3), ledit dispositif comportant une pompe (P2) supplémentaire qui pousse le produit de nettoyage depuis le réservoir (9) vers le branchement d'alimentation (16), et la pression de transport de la pompe (P2) supplémentaire étant réglable, **caractérisé en ce que** la pompe (8) est disposée entre le branchement d'aspiration (15) et le réservoir (9).

2. Dispositif de nettoyage selon la revendication 1, **caractérisé en ce que** la pression de transport de la pompe (P2) supplémentaire peut être réglée par l'intermédiaire d'un by-pass muni d'une vanne de by-pass (VR).

3. Dispositif de nettoyage selon la revendication 1 ou 2, **caractérisé en ce que** ledit dispositif comporte un générateur de vide (VG) qui est disposé parallèlement à la première pompe (P1) entre le branchement d'aspiration et le réservoir (9) et dans la conduite duquel est prévue une vanne de générateur de vide (V4).

4. Dispositif de nettoyage selon l'une quelconque des revendications précédentes, **caractérisé en ce que** ledit dispositif comporte un système interne de conduites et vannes, qui permet au choix de raccorder le côté aspiration (S) de la pompe (8) au branchement d'aspiration (15) et le branchement d'alimentation (16) à une conduite de prélèvement (11') du réservoir (9).

5. Dispositif de nettoyage selon l'une quelconque des revendications précédentes, **caractérisé en ce que** ledit dispositif comporte un système interne de conduites et vannes, qui permet au choix de raccorder le côté pression (D) de la pompe (8) au branchement d'aspiration (15) et le branchement d'alimentation (16) à une conduite de retour (12) du réservoir (9).

6. Dispositif de nettoyage selon l'une quelconque des revendications précédentes, **caractérisé en ce qu'**un panier filtrant est prévu dans le réservoir (9) autour de l'ouverture de la conduite de prélèvement (11').

7. Dispositif de nettoyage selon l'une quelconque des revendications précédentes, **caractérisé en ce que** ledit dispositif est réalisé de manière mobile, de préférence sous forme de remorque ou sur un véhicule automobile.

8. Procédé permettant de nettoyer une conduite d'eaux usées (3) d'une installation de toilettes sous pression, en particulier dans un avion (1), un train ou un autocar, comportant au moins une toilette (2, 2'), une cuve collectrice (4) et la conduite d'eaux usées (3) reliant ces deux éléments, ainsi qu'un branchement de toilettes (5) au moins temporaire dans la zone de l'une des extrémités et un branchement de cuve (6) au moins temporaire dans la zone de l'autre extrémité de la conduite d'eaux usées (3), son propre dispositif de nettoyage (7), de préférence mobile, qui comporte au moins un réservoir (9) et une pompe associée (8), fournissant via un branchement d'alimentation (16) un produit de nettoyage à une pression inférieure à la pression ambiante vers l'un des branchements (5, 6) de la conduite d'eaux usées (3), et aspirant via un branchement d'aspiration (15) le fluide contenu dans la conduite d'eaux usées (3) par l'intermédiaire de l'autre des branchements (5, 6) de la conduite d'eaux usées (3), **caractérisé en ce que** la pompe (8) est prévue dans la conduite entre le branchement d'aspiration (15) et le réservoir (9), **en ce qu'**une pompe (P2) supplémentaire transporte le produit de nettoyage depuis le réservoir (9) vers le branchement d'alimentation, et **en ce que** la pression de transport de la pompe (P2) supplémentaire est réglée en fonction du résultat de mesure d'un manomètre (M1).

9. Procédé de nettoyage selon la revendication 8, **caractérisé en ce que** pour purger le système d'eaux usées, la pompe (8) pousse le produit de nettoyage par l'intermédiaire du branchement d'alimentation (16) vers l'un des branchements (5, 6) de la conduite d'eaux usées (3), et l'autre des branchements (5, 6) est relié au réservoir (9).
